# EUROPÄISCHE PATENTSCHRIFT

(11) **EP 3 799 709 B1**
(45) Veröffentlichungstag und Bekanntmachung des Hinweises auf die Patenterteilung: **20.09.2023**
(21) Anmeldenummer: 20199004.1
(22) Anmeldetag: 29.09.2020
(51) Int. Cl.: A01B 63/04, A01B 63/16, A01D 78/10, A01B 63/00, A01D 78/00

(54) **FORMTEIL FÜR EINE KOMPONENTE, KOMPONENTE MIT DEM FORMTEIL UND LANDWIRTSCHAFTLICHE ARBEITSMASCHINE MIT DER KOMPONENTE**
MOULDING FOR A COMPONENT, COMPONENT WITH THE MOULDING AND AGRICULTURAL WORKING MACHINE WITH THE COMPONENT
PIÈCE MOULÉE POUR UN COMPOSANT, COMPOSANT POURVU DE PIÈCE MOULÉE ET MACHINE DE TRAVAIL AGRICOLE POURVUE DU COMPOSANT

(30) Priorität: 30.09.2019 DE 202019003996 U
(43) Veröffentlichungstag der Anmeldung: 07.04.2021
(73) Patentinhaber: Maschinenfabrik Bernard Krone GmbH & Co. KG, 48480 Spelle (DE)
(72) Erfinder: Lütkeharmöller, Raphael, 49809 Lingen (DE); Leifeling, Karl, 48477 Hörstel (DE)

(56) Entgegenhaltungen:
- US-A- 425 708
- US-A1- 2013 140 047
- US-A1- 2019 150 350
- US-A1- 2019 357 417
- US-A1- 2020 015 412

## Beschreibung

Die vorliegende Erfindung betrifft ein Formteil zum Einstellen eines Abstands einer Komponente einer landwirtschaftlichen Arbeitsmaschine vom Boden. Die vorliegende Erfindung betrifft weiterhin eine Komponente einer landwirtschaftlichen Arbeitsmaschine, die ein Arbeitswerkzeug sowie ein Rad umfasst, wobei das Arbeitswerkzeug mit dem Rad über den Boden geführt wird, wobei das Rad an einem Träger befestigt ist, dessen Abstand vom Boden einstellbar ist. Die vorliegende Erfindung betrifft weiterhin eine landwirtschaftliche Arbeitsmaschine mit einer solchen Komponente oder einem solchen Formteil.

Landwirtschaftliche Arbeitsmaschinen, insbesondere gezogene landwirtschaftliche Arbeitsmaschinen, die zur Erntegutbearbeitung vorgesehen sind, wie beispielsweise Wender oder Schwader, weisen oftmals mehrere Einheiten mit Arbeitswerkzeugen wie beispielsweise Kreisel auf, die mittels mindestens eines Rades oder einer Kufe über den Boden geführt werden. An den Kreiseln sind Zinken angeordnet, die zur Erntegutbearbeitung vorgesehen sind. Um den Abstand der Zinken vom Boden einzustellen, ist es bekannt, einen Abstand von Trägern, die die Räder oder Kufen tragen, vom Boden einzustellen.

Die Druckschrift DE 195 25 344 A1 offenbart als landwirtschaftliche Arbeitsmaschine einen Vielkreiselheuwender mit kombinierten Tast- und Transporträdern, die den am Mittelrahmen angeordneten Arbeitswerkzeugen zugeordnet sind. Die dem Mittelrahmen zugeordneten Tast- und Transporträder weisen Reifen mit größeren Abmessungen im Durchmesser und in der Breite sowie einer höheren Tragfähigkeit auf als die außen angeordneten, zum Führen von Mittelkreiseln genutzten Räder. Um den Abstand der Mittelkreisel vom Erdboden einzustellen, sind die Tast- und Transporträder mittels eines Hydraulikzylinders höhenverstellbar vorgesehen.

Eine solche Abstandseinstellung, mit der der Abstand der Arbeitswerkzeuge beziehungsweise der Zinken vom Boden eingestellt wird, kann auch manuell vorgesehen sein.

Auf dem Feld werden oftmals kostengünstige Räder zum Führen der Arbeitswerkzeuge genutzt. Die Reifen der Räder werden bezüglich ihres Durchmessers mit großen Toleranzen gefertigt, die im Bereich von einem Zentimeter oder sogar darüber liegen können. Bei Reifen gleichen Typs können Abweichungen in den Durchmessern zwischen verschiedenen Herstellern auftreten. Zudem schwankt der Durchmesser auch aufgrund unterschiedlicher Luftdrücke im Reifen.

Ein differierender Abstand vom Boden kann auch durch Fertigungstoleranzen anderer Bauteile der landwirtschaftlichen Arbeitsmaschine verursacht sein.

Dadurch schwankt der Abstand der Arbeitswerkzeuge zum Boden. Dies wird herkömmlich auch bei gleicher Abstandseinstellung nicht ausgeglichen. Es kann jedoch über die Arbeitsbreite zu einer ungleichmäßigen Erntegutbearbeitung und/oder, sofern die Arbeitswerkzeuge in Bodenkontakt geraten, zu Verschmutzungen im Erntegut führen. US 425 708 A offenbart eine Zungenstütze für landwirtschaftliche Maschinen, die so eingestellt werden kann, dass ein Rad in einen geeigneten Abstand zum Boden gebracht wird. US 2019/150350 A1 offenbart einen Mechanismus zur Einstellung der Saattiefe.

Aufgabe der vorliegenden Erfindung ist es, eine landwirtschaftliche Arbeitsmaschine zu schaffen, die über ihre Arbeitsbreite trotz solcher Abstandsdifferenzen der Arbeitswerkzeuge vom Boden, beispielsweise aufgrund verschiedener Reifendurchmesser und/oder weiterer Fertigungstoleranzen, ein verbessertes, gleichmäßiges Arbeitsergebnis liefert.

Die Aufgabe wird gelöst mit einem Formteil mit den Merkmalen des unabhängigen Anspruchs 1, einer Komponente mit den Merkmalen des unabhängigen Anspruchs 8 sowie einer landwirtschaftlichen Arbeitsmaschine mit den Merkmalen des Anspruchs 14. Vorteilhafte Ausführungsformen sind den abhängigen Ansprüchen entnehmbar.

Dafür wird ein Formteil geschaffen. Das Formteil ist zum Einstellen eines Abstands einer Komponente einer landwirtschaftlichen Arbeitsmaschine vom Boden vorgesehen. Es ist insbesondere zum Toleranzausgleich eines Reifendurchmessers eines Rades der landwirtschaftlichen Arbeitsmaschine vorgesehen.

Das Formteil weist einen ringförmigen Grundkörper auf. Im Grundkörper ist ein Befestigungsmittel angeordnet. Das Befestigungsmittel ist bevorzugt eine Durchgangsbohrung zur Aufnahme eines Bolzens. Die Durchgangsbohrung erstreckt sich in eine Umfangsrichtung um eine Längsachse. Ebenfalls bevorzugt ist es ein Bolzen zum Einstecken in eine Durchgangsbohrung. Der Bolzen erstreckt sich in Richtung der Längsachse. Dabei ist es bevorzugt, dass sich der Grundkörper in einer Ebene quer zur Längsachse erstreckt.

Das Formteil weist zumindest eine Zunge auf, die sich vom Grundkörper ausgehend in eine radiale Richtung zur Längsachse zu einem freien Ende hin erstreckt. Die Zunge ist zum Aufnehmen einer auf sie wirkenden Belastungskraft vorgesehen. Zudem ermöglicht sie ein Verändern eines Winkels, den ein Haltearm für ein Rad einer Komponente, die das Formteil nutzt, gegenüber dem Boden aufweist. Dadurch kann ein Abstand eines zum Tragen des Rades vorgesehenen Trägers zum Boden verändert werden.

Am Formteil ist, ausgehend vom Grundkörper, ein Zungenpaar aus zwei Zungen angeordnet, die sich jeweils vom Grundkörper ausgehend in radialer Richtung zur Längsachse zu einem freien Ende hin erstrecken. Die Länge der Zungen ist dabei ungleich vorgesehen. Weiterhin sind die Zungen an gegenüberliegenden Seiten des Grundkörpers angeordnet. In einer radialen Richtung zur Längsachse sind die Zungen daher fluchtend zueinander am Formteil angeordnet.

Aufgrund der unterschiedlichen Längen der Zungen ist ein Abstand des Befestigungsmittels vom freien Ende der beiden Zungen verschieden.

Das Formteil zeichnet sich dadurch aus, dass an ihm, ausgehend vom Grundkörper, weitere Zungenpaare aus jeweils zwei Zungen angeordnet sind, die sich jeweils in radialer Richtung zur Längsachse erstrecken und einander gegenüberliegend am Formteil angeordnet sind. Auch diese Zungen weisen bevorzugt eine ungleiche Länge auf. Ein Bolzenabstand ihrer freien Enden zum Befestigungsmittel ist auch für diese Zungen daher verschieden.

In einer bevorzugten Ausführungsform weisen alle Zungen des Formteils eine unterschiedliche Länge auf. Dadurch ist der Bolzenabstand aller freien Enden zum Befestigungsmittel verschieden. Es ist aber besonders bevorzugt, dass das Formteil ein Zungenpaar mit Zungen gleicher Länge aufweist, wobei der Bolzenabstand der freien Enden dieser beiden Zungen zum Befestigungsmittel daher gleich ist. Mit diesem Zungenpaar ist eine Neutralstellung einstellbar.

An ihren freien Enden weisen die Zungen bevorzugt eine im Querschnitt bogenförmige Kontur auf. Dadurch kann ein geradliniges Verschieben des Formteils verhindert werden.

Weiterhin bevorzugt weisen die Zungen jeweils an ihrem freien Ende eine Anlagefläche auf. Die Anlageflächen sind zur Anlage an Gegenanlageflächen eines Rahmenbauteils vorgesehen. Dabei ist jede der Anlageflächen bevorzugt durch eine sich entlang ihrer der Kontur der Zunge verlaufende Linie und eine parallel zur Längsachse verlaufende Linie aufgespannt.

Die Anlageflächen aller Zungen des Formteils sind besonders bevorzugt alle gleich. Die Zungen weisen dann alle dieselben Ausmaße, insbesondere dieselbe Breite und/oder Dicke, und/oder dieselbe Form, insbesondere dieselbe Kontur, auf. Dadurch können sie an dieselbe Gegenanlagefläche angelegt werden.

In einer besonders bevorzugten Ausführungsform ist jeweils ein Abstand der freien Enden der beiden Zungen eines Zungenpaares für alle Zungenpaare des Formteils gleich. Dadurch können alle Zungenpaare des Formteils zwischen zwei gleich zueinander beabstandete Gegenanlageflächen eines Rahmenbauteils eingefügt werden. Vorzugsweise sind auch die beiden Gegenanlageflächen gleich ausgebildet. Dabei ist es bevorzugt, dass die Gegenanlageflächen jeweils korrespondierend zur Anlagefläche, insbesondere in Bezug auf ihre Ausmaße und Form, ausgebildet sind. Das Formteil kann dann zwischen die Gegenanlageflächen des Rahmenbauteils vorzugsweise nicht nur eingefügt sondern verklemmt werden. Dabei kann durch Drehen des Formteils dasjenige Zungenpaar ausgewählt werden, das zwischen die Gegenanlageflächen eingefügt wird. Aufgrund der verschiedenen Längen der Zungen verschiebt sich dabei der Abstand des Befestigungsmittels, insbesondere der Durchgangsbohrung oder des Bolzens, von den Gegenanlageflächen.

Das Formteil ist bevorzugt aus einem Bandmaterial, insbesondere einem Endlos-Flachbandmaterial, beispielsweise einem Blech, gefertigt. Besonders bevorzugt ist es einstückig, insbesondere als Stanzbauteil, gefertigt. Dabei ist es zudem bevorzugt, dass das Formteil eine konstante Dicke aufweist. Als Stanzbauteil kann es sehr kostengünstig und schnell in großen Stückzahlen gefertigt werden.

Die Aufgabe wird weiterhin gelöst mit einer Komponente für eine landwirtschaftliche Arbeitsmaschine, die ein Arbeitswerkzeug sowie ein Rad umfasst, wobei das Arbeitswerkzeug mit dem Rad über den Boden geführt wird, wobei das Rad an einem Träger befestigt ist, wobei ein Abstand des Trägers vom Boden einstellbar ist. Die Komponente zeichnet sich dadurch aus, dass die Abstandseinstellung des Trägers eine Grobeinstellung sowie eine Feineinstellung umfasst.

Prinzipiell können Komponenten dieser Art nur entweder die Grobeinstellung oder die Feineinstellung aufweisen. Jedoch sind die mit der Grobeinstellung einstellbaren Stufen für den Ausgleich von Fertigungsdifferenzen, insbesondere von Fertigungstoleranzen des Reifens des Rades, zu groß. Weiterhin sind die mit der Feineinstellung einstellbaren Stufen für die bei der Arbeit benötigten Abstandseinstellungen des Arbeitswerkzeugs zu gering.

Mit der erfindungsgemäßen Komponente kann, insbesondere mittels der Grobeinstellung, der Abstand von dem an der Komponente angeordneten Arbeitswerkzeug, beispielsweise eines Kreisels, an dem eine Vielzahl Zinken angeordnet sind, eingestellt werden. Bevorzugt wird die Grobeinstellung für die Einstellung eines Streuwinkels der Zinken genutzt. Zudem lässt die Abstandseinstellung, insbesondere mittels der Feineinstellung, einen Ausgleich von Toleranzen, insbesondere der Reifen des Rades, zu.

Mit der Grobeinstellung ist bevorzugt der Abstand des Arbeitswerkzeugs zunächst stufenweise einstellbar. Weiterhin bevorzugt sind mit der Feineinstellung zwischen zwei Stufen der Grobeinstellung danach stufenweise Zwischenstufen einstellbar. Auch die Feineinstellung verändert daher den Abstand des Arbeitswerkzeugs vom Boden.

In einer bevorzugten Ausführungsform, die die Aufgabe ebenfalls löst, umfasst die Grobeinstellung und/oder die Feineinstellung ein erfindungsgemäßes Formteil. Eine solche Grobeinstellung und/oder Feineinstellung ist mit dem Formteil kostengünstig realisierbar.

Die Komponente zeichnet sich dadurch aus, dass der Träger einen Haltearm umfasst, an dem ein erstes Rahmenbauteil für die Grobeinstellung sowie ein zweites Rahmenbauteil für die Feineinstellung befestigt sind.

Dafür ist bevorzugt zur Grobeinstellung ein erster Anstellwinkel des Trägers zum ersten Rahmenbauteil veränderbar. Weiterhin bevorzugt ist zur Feineinstellung ein zweiter Anstellwinkel des zweiten Rahmenbauteils zum ersten Rahmenbauteil veränderbar. Das zweite Rahmenbauteil weist daher einen Summenanstellwinkel relativ zum Träger auf, der sich aus der Addition des ersten und des zweiten Anstellwinkels ergibt. Der Summenanstellwinkel, den das zweite Rahmenbauteil zum Träger aufweist, entspricht daher dem um den zweiten Anstellwinkel vergrößerten oder verkleinerten ersten Anstellwinkel.

Das Rad ist bevorzugt an einem zweiten Ende des Haltearms angeordnet. Dadurch bestimmt der Summenanstellwinkel den Winkel, den der Haltearm zum Boden aufweist. Dieser Winkel bestimmt den Abstand des Trägers vom Boden, und daher die Höhe, in der die Komponente gegenüber dem Boden angeordnet ist.

Die Rahmenbauteile erstrecken sich bevorzugt jeweils in einer Ebene quer zu einer Längsachse und liegen weiterhin bevorzugt aneinander an. Dadurch ist eine Reibfläche zwischen den Rahmenbauteilen groß. Weiterhin bevorzugt liegt der Träger am ersten Rahmenbauteil oder am zweiten Rahmenbauteil an. Auch zwischen dem Träger und diesem Rahmenbauteil ist daher die Reibfläche groß. Aufgrund ihrer großen Reibflächen aneinander haften die Rahmenbauteile und der Träger gut aneinander an.

In einer besonders bevorzugten Ausführungsform umfasst das zweite Rahmenbauteil eine Ausnehmung zur Aufnahme des Formteils, wobei am ersten Rahmenbauteil ein Gegenbefestigungsmittel angeordnet ist, wobei das Formteil ein Befestigungsmittel aufweist, wobei an der Ausnehmung Gegenanlageflächen für Anlageflächen der Zungen eines Zungenpaares des Formteils angeordnet sind, wobei bei in die Ausnehmung des zweiten Rahmenbauteils aufgenommenem Formteil die Anlageflächen eines Zungenpaares zwischen die Gegenanlageflächen des zweiten Rahmenbauteils eingefügt sind, und das Befestigungsmittel mit dem Gegenbefestigungsmittel so zusammenwirkt, dass die Rahmenbauteile aneinander befestigt sind.

Dabei ist es bevorzugt, dass das Befestigungsmittel eine Durchgangsbohrung und das Gegenbefestigungsmittel ein Bolzen ist. Das Befestigungsmittel kann aber auch als Bolzen ausgebildet sein, wobei dann das Gegenbefestigungsmittel als Durchgangsbohrung ausgebildet ist.

Besonders bevorzugt wird das Formteil für die Feineinstellung der Komponente genutzt. Prinzipiell kann ein solches Formteil aber auch für die Grobeinstellung genutzt werden.

Der Bolzen erstreckt sich bevorzugt in eine Längsrichtung um eine Längsachse. Weiterhin bevorzugt erstreckt sich die Durchgangsbohrung in Umfangsrichtung um die Längsachse. Im aneinander befestigten Zustand ist es bevorzugt, dass der Bolzen die Durchgangsbohrung durchsetzt. Dabei sind die Durchmesser des Bolzens und der Durchgangsbohrung bevorzugt im Wesentlichen gleich, so dass der Bolzen die Durchgangsbohrung möglichst spielfrei durchsetzt.

Die Ausnehmung ist bevorzugt als Langloch ausgebildet. Dabei ist es besonders bevorzugt, dass die Anlageflächen jeweils an einer langen Seite des Langlochs angeordnet sind. Weiterhin bevorzugt weist das Langloch an seinen Schmalseiten eine aufgeweitete Kontur auf. Es kann beispielsweise etwa 8- förmig geformt sein. Der Bereich der aufgeweiteten Kontur nimmt die Zungen des Formteils auf.

Das zweite Rahmenbauteil ist bevorzugt drehfest am Haltearm befestigt. Vorzugsweise ist das zweite Rahmenbauteil am Haltearm angeschweißt. Das zweite Rahmenbauteil und der Haltearm können aber auch form- und/oder kraftschlüssig drehfest miteinander verbunden sein. Dabei ist es besonders bevorzugt, dass das zweite Rahmenbauteil an einem ersten Ende des Haltearms drehfest befestigt ist.

Der Haltearm erstreckt sich bevorzugt zumindest teilweise parallel der Längsachse. Es ist aber besonders bevorzugt, dass der Haltearm etwa u- förmig geformt ist. Dadurch kann das Rad etwa unterhalb des Arbeitswerkzeugs angeordnet sein.

Besonders bevorzugt ist der Haltearm aus einem Rohr gefertigt. Prinzipiell kann er aber auch aus einem Flachbandmaterial hergestellt werden. Dabei ist es weiterhin bevorzugt, dass die Rahmenbauteile aus einem Flachbandmaterial, insbesondere aus einem Blech, gefertigt sind.

Die Aufgabe wird weiterhin gelöst mit einer landwirtschaftlichen Arbeitsmaschine mit zumindest einer solchen Komponente oder einem solchen Formteil. Die Erfindung ist bei jeder landwirtschaftlichen Arbeitsmaschine anwendbar. Die landwirtschaftliche Arbeitsmaschine ist aber bevorzugt eine gezogene landwirtschaftliche Arbeitsmaschine.

In einer bevorzugten Ausführungsform ist die landwirtschaftliche Arbeitsmaschine eine Heuwerbungsmaschinen, insbesondere ein Zettwender oder ein Kreiselschwader. Die Komponente ist dann bevorzugt ein Zettkreisel oder ein Schwadkreisel der Arbeitsmaschine. Die Arbeitswerkzeuge sind dann bevorzugt Kreisel, an denen Zinken angeordnet sind.

Die Aufgabe wird weiterhin gelöst mit einem Verfahren zum Einstellen eines Abstands eines Arbeitswerkzeugs einer landwirtschaftlichen Arbeitsmaschine, insbesondere eines Kreisels eines Zettwenders oder Kreiselschwaders, bei dem der Abstand zunächst mittels einer Grobeinstellung stufenweise eingestellt wird, und bei dem anschließend mittels einer Feineinstellung eine Zwischenstufe eingestellt wird. Vorzugsweise wird mittels der Feineinstellung zwischen der grob eingestellten Stufe und einer ihr benachbarten Stufe die Zwischenstufe eingestellt. Das Verfahren ermöglicht einen Toleranzausgleich von Fertigungstoleranzen, insbesondere der Reifen der Räder der das Arbeitswerkzeug umfassenden Komponente.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: einen Arbeitszug umfassend eine Zugmaschine an die eine erfindungsgemäße landwirtschaftliche Arbeitsmaschine, hier ein Zettwender, angehängt ist;
- Fig. 2: in (a) schematisch eine erste Ausführungsform eines erfindungsgemäßen Formteils in einer Draufsicht, in (b) eine zweite Ausführungsform eines erfindungsgemäßen Formteils in einer Draufsicht, und in (c) das Formteil aus (b) in einer perspektivischen Ansicht;
- Fig. 3: in (a) schematisch ein zweites Rahmenbauteil für die Feineinstellung der Abstandseinstellung einer Komponente in einer Draufsicht, in (b) perspektivisch das Rahmenbauteil aus Fig. 3 (a) verbunden mit einem Haltearm, und in (c) eine Anordnung aus den Bauteilen für die Feineinstellung und die Grobeinstellung in einer Explosionsdarstellung;
- Fig. 4: zeigt einen Ausleger, an dem ein Zettkreisel angeordnet ist, in einer perspektivischen Ansicht;

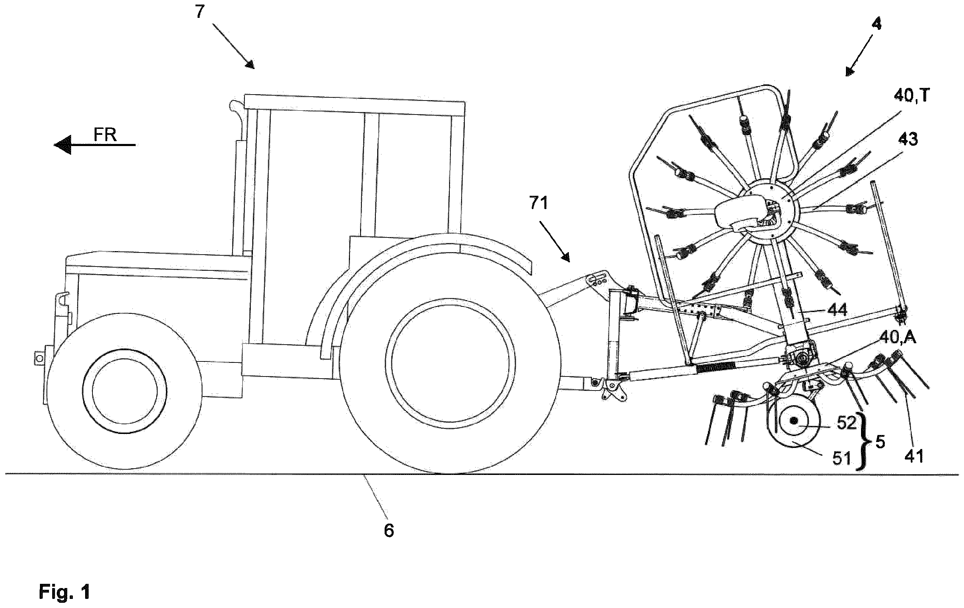

Fig. 1 zeigt einen Arbeitszug umfassend eine Zugmaschine 7 und eine erfindungsgemäße landwirtschaftliche Arbeitsmaschine 4. Die landwirtschaftliche Arbeitsmaschine 4 ist hier eine Heuwerbungsmaschine, nämlich ein Zettwender. Im Folgenden werden die Begriffe landwirtschaftliche Arbeitsmaschine 4, Heuwerbungsmaschine und Zettwender synonym verwendet.

Die landwirtschaftliche Arbeitsmaschine 4 ist aber nicht auf Zettwender 4 beschränkt, sondern auch auf andere landwirtschaftliche Arbeitsmaschinen 4 anwendbar, beispielsweise auf Kreiselschwader.

Es handelt sich hier um eine mittels einer Zugmaschine 7 gezogene landwirtschaftliche Arbeitsmaschine 4. Dafür ist der Zettwender 4 an eine Dreipunkt-Hubvorrichtung 71 der Zugmaschine 7 angehängt und über eine Zapfwelle (nicht gezeigt) der Zugmaschine 7 antreibbar.

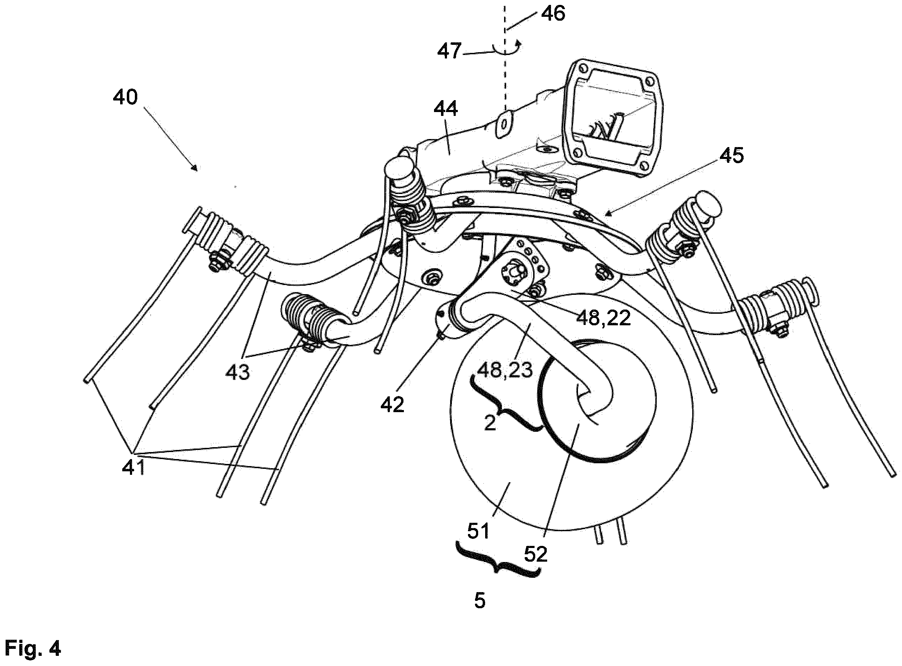

Der Zettwender 4 weist hier zwei Komponenten 40 auf, die im Folgenden auch als Zettkreisel bezeichnet sind. Im Folgenden werden die Begriffe Komponente 40 und Zettkreisel synonym verwendet. Jeder der Zettkreisel 40 umfasst jeweils ein Rad 5, mit dem sich der Zettkreisel 40 vom Boden 6 abstützt, und ein Arbeitswerkzeug, hier einen Kreisel 45 (s. Fig. 4).

Die Komponenten 40 sind jeweils an einem Ausleger 44 angeordnet. Die Ausleger 44 sind jeweils mittels fremdkraftbetätigtem Aktor, hier Hydraulikzylindern, anhebbar. In der Darstellung befindet sich einer der Zettkreisel 40 in der Transportposition T und der andere Zettkreisel 40 in der Arbeitsposition A. Der Zettwender 4 ist hier zudem mittels der Dreipunkt- Hubvorrichtung 71 vom Boden angehoben.

In eine Umfangsrichtung (nicht bezeichnet) um die Kreisel 45 verteilt sind Arme 43 angeordnet, an denen Zinken 41 zur Bearbeitung von Erntegut vorgesehen sind.

Das Rad 5 umfasst eine Felge 52 und einen Reifen 52. Die Felge 52 ist über einen Haltearm 23 am Zettkreisel 40 befestigt.

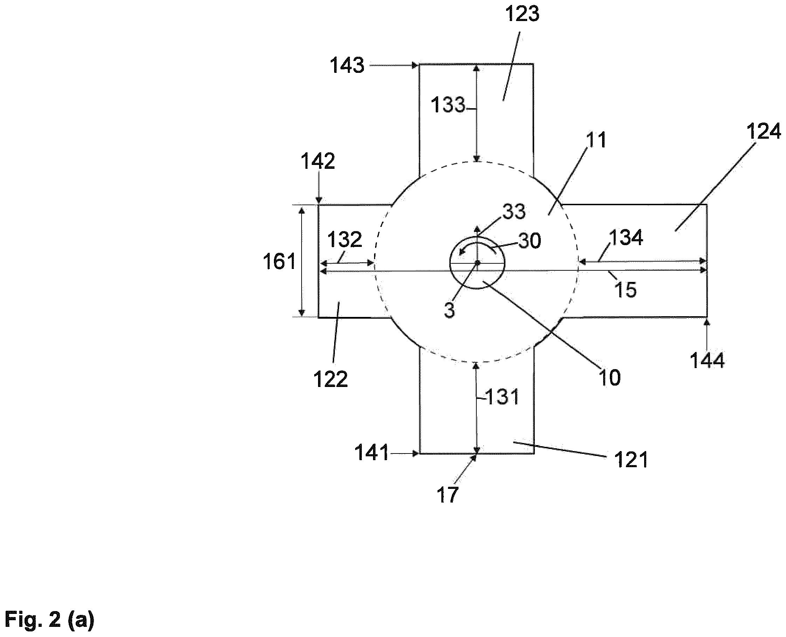

Fig. 2 (a) zeigt ein Formteil 1 zur Feineinstellung des Abstands eines der Zettkreisel 40 vom Boden 6. Das Formteil 1 weist einen ringförmigen Grundkörper 11 auf. Im Grundkörper 11 ist ein Befestigungsmittel 10 angeordnet. Das Befestigungsmittel 10 ist als Durchgangsbohrung 10 zur Aufnahme 211 eines Bolzens ausgeprägt. Im Folgenden werden die Begriffe Befestigungsmittel 10 und Durchgangsbohrung synonym verwendet. Die Durchgangsbohrung 10 erstreckt sich in eine Umfangsrichtung 30 um eine Längsachse 3. Ein Abstand von einem Außendurchmesser der Durchgangsbohrung 10 zu einem Außendurchmesser des Grundkörpers 11 ist überall gleich.

Das Formteil 1 weist hier zwei Zungenpaare aus jeweils zwei Zungen 121 - 12i auf, deren Zungen 121 - 12i jeweils an gegenüberliegenden Seiten des Grundkörpers 11 angeordnet sind. Die Zungenpaare erstrecken sich vom Grundkörper 11 ausgehend in eine radiale Richtung 31 zur Längsachse 3 zu einem freien Ende 141 - 14i hin. Ein Abstand 15 der freien Enden 141 - 14i der beiden Zungen 121 - 12i eines Zungenpaares ist bei allen Zungenpaaren des Formteils 1 jeweils gleich. Dabei ist eine Länge 131 - 13i der Zungen 121 - 12i des einen Zungenpaares 121, 123 gleich, und des anderen Zungenpaares 122, 124 ungleich vorgesehen.

Die Zungen 121 - 12i sind in eine Umfangsrichtung 30 um die Längsachse 3 gleichmäßig verteilt am Grundkörper 11 angeordnet. Daher ist ein Drehwinkel (nicht bezeichnet) zwischen benachbarten Zungen 121 - 12i überall gleich. Durch Wahl eines anderen Drehwinkels und/oder einer ungeraden Anzahl Zungen 121 - 12i können mehr oder weniger Zungen 121 - 12i am Formteil 1 vorgesehen sein. Dies ist im Rahmen dieser Beschreibung durch den Index "i" verdeutlicht.

Bei unterschiedlichen Längen 131 - 13i der Zungen 13i ist ein Abstand des Befestigungsmittels 10 vom freien Ende 141 - 14i der beiden Zungen 121 - 12i eines Zungenpaares daher verschieden.

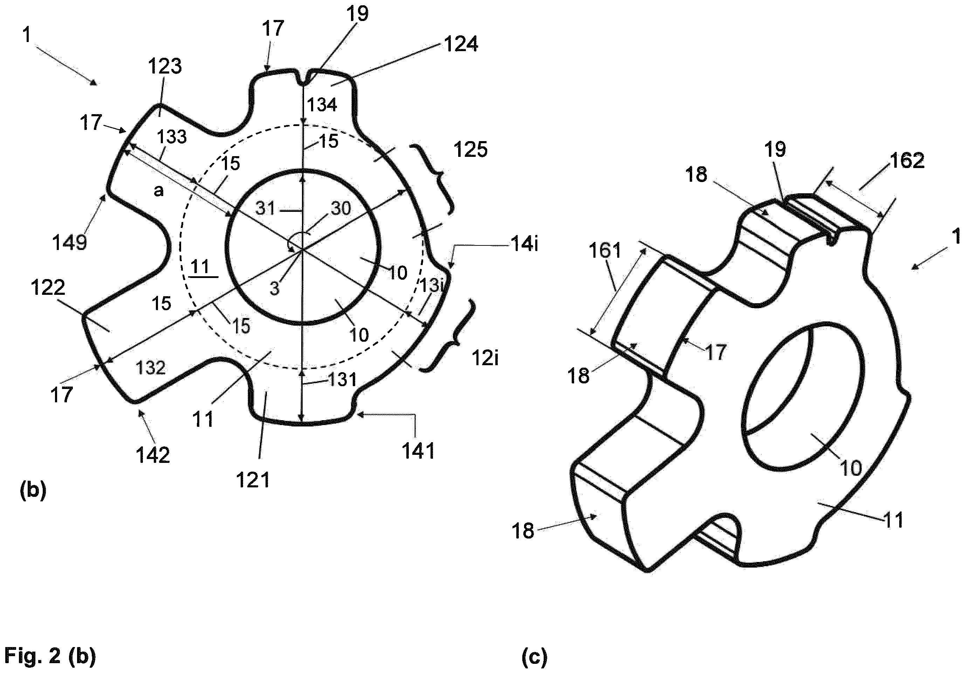

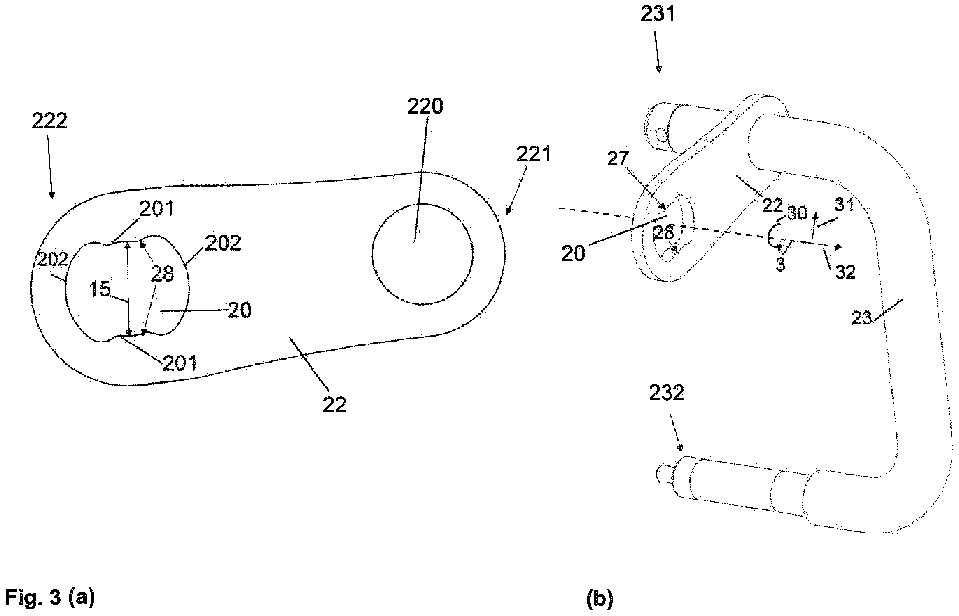

An ihrem freien Ende 141 - 14i weisen die Zungen 121 - 12i jeweils eine Anlagefläche 18 (s. Fig. 2 (c)) auf. Dabei weisen die Zungen 12i hier alle dieselbe Breite 161 und Dicke 162 (s. Fig. 2 (c)) auf. Zudem ist eine Kontur 17 der Zungen 121 - 12i an ihren freien Enden 141 - 14i gleich. Die Anlagefläche 18 in diesem Ausführungsbeispiel ist rechteckig vorgesehen und die Kontur 17 der Zungen 121 - 12i an ihrem freien Ende 141 - 14i jeweils geradlinig. Die Anlageflächen 18 weisen daher hier alle dieselbe Form auf. Dadurch können die Zungen 121 - 12i mit ihrer Anlagefläche 18 an eine Gegenanlagefläche 28 (s. Fig. 3 (a)) derselben Form angelegt werden.

Fig. 2 (b) zeigt eine zweite Ausführungsform eines erfindungsgemäßen Formteils 1. Die Besonderheiten und Unterschiede der Ausführungsformen werden im Folgenden erläutert.

Bei der zweiten Ausführungsform weisen die Zungen 121 - 12i an ihren freien Enden 141 - 14i eine im Querschnitt bogenförmige Kontur 17 auf. Dadurch kann ein geradliniges Verschieben des Formteils 1 verhindert werden.

Die Zungen 121 - 12i sind in Umfangsrichtung 30 zur Längsachse 3 voneinander beabstandet. Zwischen benachbarten Zungen 121 - 12i sind daher Einbuchtungen (nicht bezeichnet) vorgesehen. Diese Einbuchtungen erstrecken sich im Gegensatz zur Ausführungsform der Fig. 2 (a) teilweise nicht bis zum Grundkörper 11 des Formteils 1.

Dadurch wird bei dieser Ausführungsform des Formteils 1 eine höhere Steifigkeit erreicht. Durch die Radien der Einbuchtungen wird die Steifigkeit des Formteils 1 ebenfalls positiv beeinflusst. Eine Kerbe 19 in der Mitte (nicht bezeichnet) der Kontur einer der Zungen 121 - 12i des Zungenpaares mit gleichlangen Zungen 121 - 12i dient zur Erkennung einer Neutralstellung N der Feineinstellung.

Fig. 2 (c) zeigt die zweite Ausführungsform eines erfindungsgemäßen Formteils aus Fig. 2 (b) in perspektivischer Ansicht.

Fig. 3 (a) zeigt ein zweites Rahmenbauteil 22 für die Feineinstellung der Abstandseinstellung der Komponente 40. Das zweite Rahmenbauteil 22 weist an einem ersten Ende 221 eine Durchführung 220 auf, mit der es mit einem ersten Ende 231 eines Haltearms 23 verbindbar ist.

Das zweite Rahmenbauteil 22 weist zudem an einem zweiten Ende 222 eine Ausnehmung 20 zur Aufnahme des Formteils 1 auf. Die Ausnehmung 20 ist als Langloch ausgebildet und weist daher zwei Schmalseiten 202 sowie zwei lange Seiten 201 auf, wobei sich jeweils die beiden Schmalseiten 202 und die beiden langen Seiten 201 gegenüber liegen.

In der Ausnehmung 20 sind Gegenanlageflächen 28 für die Anlageflächen 18 der Zungen 121 - 12i eines Zungenpaares des Formteils 1 angeordnet. Die Gegenanlageflächen 28 sind an den langen Seiten 201 der Ausnehmung 20 vorgesehen. Der Abstand 15 der freien Enden 141 - 14i der Zungen 121 - 12i eines Zungenpaars ist dabei im Wesentlichen gleich dem Abstand der Gegenanlageflächen 28 in der Ausnehmung 20 des zweiten Rahmenbauteils 22. Dadurch ist das Formteil 1 in die Ausnehmung 20 einsetzbar, wobei die Anlageflächen 18 der Zungen 121 - 12i eines der Zungenpaare des Formteils 1 im Wesentlichen an den Gegenanlageflächen 28 des zweiten Rahmenbauteils 22 anliegen.

Im Bereich der Schmalseiten 202 ist die Ausnehmung 20 verbreitert, so dass sie insgesamt etwa achtförmig ausgebildet ist. Dadurch können in den verbreiterten Bereichen die nicht an den Gegenanlageflächen 28 anliegenden Zungen 121 - 12i platziert werden.

Fig. 3 (b) zeigt das mit dem Haltearm 23 drehfest verbundene zweite Rahmenbauteil 22 aus Fig. 3 (a) . Der Haltearm 23 ist etwa u- förmig geformt, sodass er ein erstes Ende 231 und ein zweites Ende 232 aufweist, die etwa fluchtend zueinander angeordnet sind. Das erste Ende 231 des Haltearms 23 ist durch die Durchführung des zweiten Rahmenbauteils 220 geführt und mit diesem drehfest verbunden. Es ist hier am Haltearm 23 angeschweißt. Das zweite Rahmenbauteil 22 und der Haltearm 23 können aber auch form- und/oder kraftschlüssig drehfest miteinander verbunden sein. Dadurch erstreckt sich der Haltearm 23 zumindest teilweise parallel der Längsachse 3.

Am zweiten Ende 232 des Haltearms 23 kann ein Rad 5 angeordnet sein. Aufgrund der u- förmigen Form des Haltearms 23 kann dieses etwa unterhalb der Komponente 40 angeordnet werden.

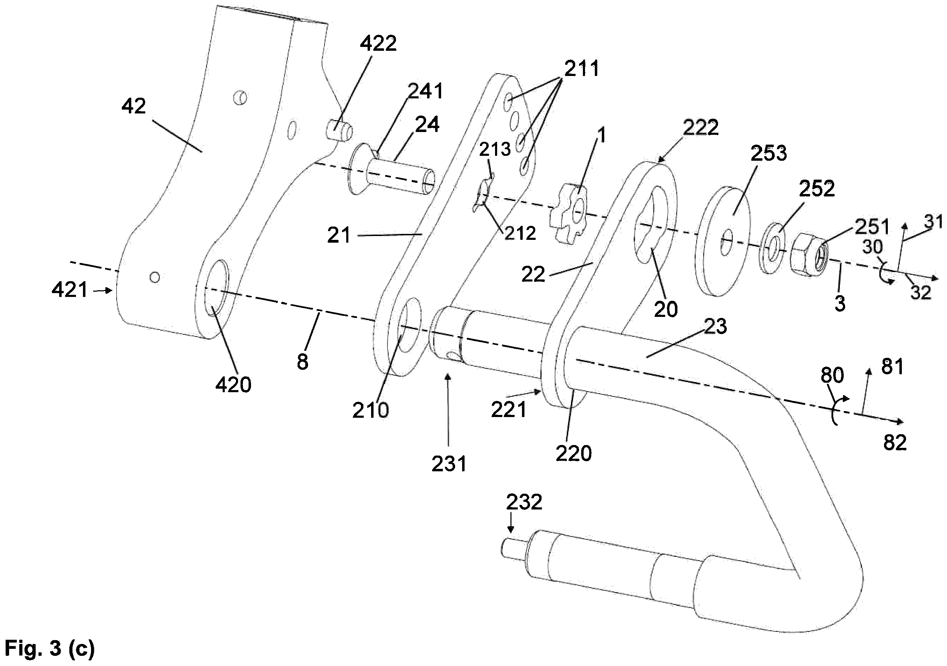

Fig. 3 (c) zeigt eine Anordnung umfassend die Bauteile für die Feineinstellung und die Grobeinstellung in einer Explosionsdarstellung. Die Anordnung umfasst das für die Feineinstellung vorgesehene zweite Rahmenbauteil 22 mit dem Haltearm 23 aus Fig. 3 (b), das erfindungsgemäße Formteil 1 aus Fig. 2 (b), ein erstes Rahmenbauteil 21 für die Grobeinstellung sowie einen als Träger 42 dienenden Achsbock. Mit der Anordnung ist die Abstandseinstellung der Komponente 40 der landwirtschaftlichen Arbeitsmaschine 4 möglich. Im Folgenden werden die Begriffe Träger 42 und Achsbock synonym verwendet.

Das zweite Rahmenbauteil 22 ist am Haltearm 23 angeschweißt und daher drehfest befestigt. Der Haltearm 23 erstreckt sich an seinem ersten Ende entlang einer Verstellachse 8. Er ist durch eine Durchführung 210 des ersten Rahmenbauteils 21 gegen eine axiale Richtung 82 durchführbar.

Um das Formteil 1 in der Ausnehmung 20 des zweiten Rahmenbauteils 22 zu befestigen, ist am ersten Rahmenbauteil 21 ein Gegenbefestigungsmittel 24 vorgesehen. Das Gegenbefestigungsmittel 24 ist hier als Schraube 24 dargestellt. Im Folgenden werden daher die Begriffe Gegenbefestigungsmittel 24 und Schraube synonym verwendet. Die Schraube 24 wird in eine Bohrung 212 des ersten Rahmenbauteils 21 eingeführt. Ein Kopf (nicht bezeichnet) der Schraube 24 liegt dann am ersten Rahmenbauteil 21 an. Damit die Schraube 24 drehfest ist, weist der Kopf der Schraube 24 eine Nase 241 auf, welche in eine Nut 213 der Bohrung 212 eingreift. Alternativ kann die Schraube 24 auch angeschweißt werden, um die Drehfestigkeit zu sichern.

Das Formteil 1 ist dann auf die Schraube 24 aufsteckbar. Für die Feineinstellung wird es vor dem Einfügen in die Ausnehmung 20 so gedreht, dass das benötigte Zungenpaar mit seinen Anlageflächen 18 an den Gegenanlageflächen 28 der Ausnehmung 20 anliegt.

In dieser Ausführungsform kann ein Verdrehen des Formteils 1 durch einen Formschluss der Anlageflächen 18 der zwischen die Gegenanlageflächen 28 positionierten und an diesen anliegenden Zungen 121 - 12i vermieden werden. Das Formteil 1 kann dafür dünner ausgeführt sein, als das zweite Rahmenbauteil 22. Diese Ausführungsform hat den Vorteil, dass Vibrationen während des Feldbetriebs nicht auf das Formteil 1 wirken, und die beiden Rahmenbauteile 21, 22 reibschlüssig miteinander verbunden sind.

Das Formteil 1 kann aber auch zumindest die Dicke des zweiten Rahmenbauteils 22 aufweisen oder dicker ausgebildet sein. In dieser Ausführungsform kann es nur eine einzige Zunge 121 - 12i oder Zungenpaare aufweisen. Ein Verdrehen des Formteils 1 wird dann reibschlüssig verhindert, wobei der Reibschluss durch Aufdrehen einer Mutter 251 auf die Schraube 24 bewirkt wird.

Um in einem montierten Zustand ein Eindringen von Staub und Schmutz in die Ausnehmung 20 zu vermeiden, und das Formteil 1 verliersicher in der Ausnehmung 20 zu befestigen, ist eine die Ausnehmung 20 vollständig überdeckende Abdeckung 253 auf die Schraube 24 aufsteckbar. Anschließend werden das Formteil 1 und die Abdeckung 253 mittels einer Scheibe 252 und der auf die Schraube 24 aufgedrehten Mutter 251 gesichert. In diesem Zustand ist das erste Rahmenbauteil 21 nicht mehr relativ zum zweiten Rahmenbauteil 22 drehbar.

Die Grobeinstellung erfolgt durch ein Verdrehen des ersten Rahmenbauteils 21 relativ zum Achsbock 42. Dafür ist der Haltearm 23 durch eine Durchführung 420 des Achsbocks 42 durchführbar. Er durchsetzt dann das erste Rahmenbauteil 21 sowie den Achsbock 42.

Am Achsbock 42 ist ein Stift 422 angeordnet, das im montierten Zustand in eine Aufnahme 211 des ersten Rahmenbauteils eingreift. Für die Grobeinstellung sind mehrere Aufnahmen 211 vorgesehen. In dem ersten Rahmenbauteil 21 sind hier vier Aufnahmen 211 vorgesehen. Das erste Rahmenbauteil 21 kann aber auch mehr oder weniger als vier Aufnahmen 211 aufweisen. Die Grobeinstellung erfolgt durch das Drehen des ersten Rahmenbauteils 21 in Umfangsrichtung 31 um die Verstellachse 8 und anschließendem Einführen des Stifts 422 in eine der Aufnahmen 211 des ersten Rahmenbauteils 21. Der Stift 422 sichert das erste Rahmenbauteil 21 gegen ein Verdrehen gegenüber dem Achsbock 42.

An einer dem ersten Rahmenbauteil 21 abgewandten Seite 421 des Achsbocks 42 kann der Haltearm 23 danach, beispielsweise mittels eines Splints (nicht gezeigt), befestigt werden. Dafür ist am ersten Ende 231 des Haltearms 23 eine Bohrung (nicht bezeichnet) vorgesehen. Dann ist der Haltearm 23 nicht mehr vom Achsbock 42 lösbar. In diesem montierten Zustand sind das erste Rahmenbauteil 21 sowie der Achsbock 42 drehfest am Haltearm 23 befestigt. Das zweite Rahmenbauteil 22 liegt dann am ersten Rahmenbauteil 21 und das erste Rahmenbauteil 21 am Achsbock 42 an.

Fig. 4 zeigt einen Zettkreisel 40 der landwirtschaftlichen Arbeitsmaschine 4 der Fig. 1 in einer vergrößerten perspektivischen Ansicht. Der Zettkreisel 40 ist an einem Ausleger 44 angeordnet. Der Ausleger 44 ist an der Dreipunkt-Hubvorrichtung 71 der landwirtschaftlichen Arbeitsmaschine 4 befestigt.

An dem Ausleger 44 ist der Zettkreisel 40 zum Wenden von landwirtschaftlichem Erntegut drehbar befestigt. Dafür weist der Zettkreisel 40 einen Kreisel 45 auf. Angetrieben wird der Zettkreisel 40 durch eine Antriebswelle (nicht gezeigt) im Ausleger 44, die ein Ritzel (nicht gezeigt) antreibt. Das Ritzel in Verbindung mit einem Kegelrad (nicht gezeigt) des Kreisels 45 dreht den Kreisel 45 um eine Drehachse 46 in eine Drehrichtung 47.

An dem Kreisel 45 sind die Arme 43 befestigt, welche sich etwa strahlenförmig von der Drehachse 46 ausgehend erstrecken und in Umfangsrichtung 47 um die Drehachse 46 gleichmäßig verteilt angeordnet sind. Die Anzahl der Arme 43 ist hier auf sechs festgelegt. Es können aber mehr oder weniger Arme 43 vorgesehen sein.

An den Armen 43 sind Zinken 41 angeordnet, die zum Wenden von auf dem Boden 6 liegendem landwirtschaftlichem Erntegut vorgesehen sind.

Mittig des Kreisels 45 ist ein Rad 5 befestigt, mit dem der Zettkreisel 40 über den Boden 6 geführt wird. Mittels der Grobeinstellung ist der Haltearm 23 verstellbar, um den Streuwinkel der Zinken 41 an das Erntegut sowie weitere Erntebedingungen anzupassen. Dafür weist der Zettkreisel 40 die Anordnung aus Fig. 3 (c) auf. Sie ist an dem als Träger 42 dienenden Achsbock befestigt. Daher ist bei diesem Zettkreisel 40 neben der Grobeinstellung auch eine Feineinstellung möglich. Die Feineinstellung ermöglicht beispielsweise einen Toleranzausgleich von Fertigungstoleranzen der Durchmesser des Reifens 51.

Das Rad 5 ist zudem, beispielsweise an Feldgrenzen oder am Hang, zum Grenzstreuen um die Drehachse 46 winkelig anstellbar.

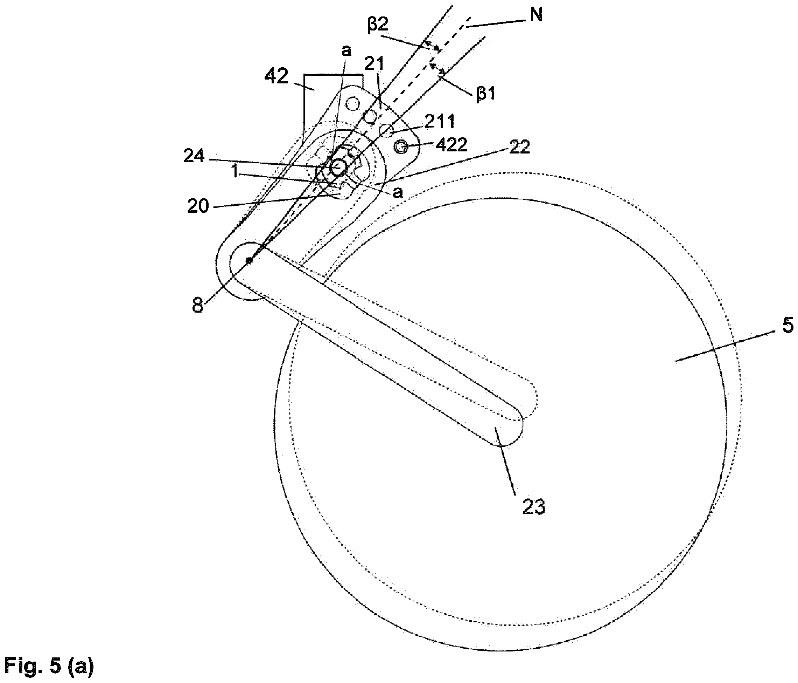

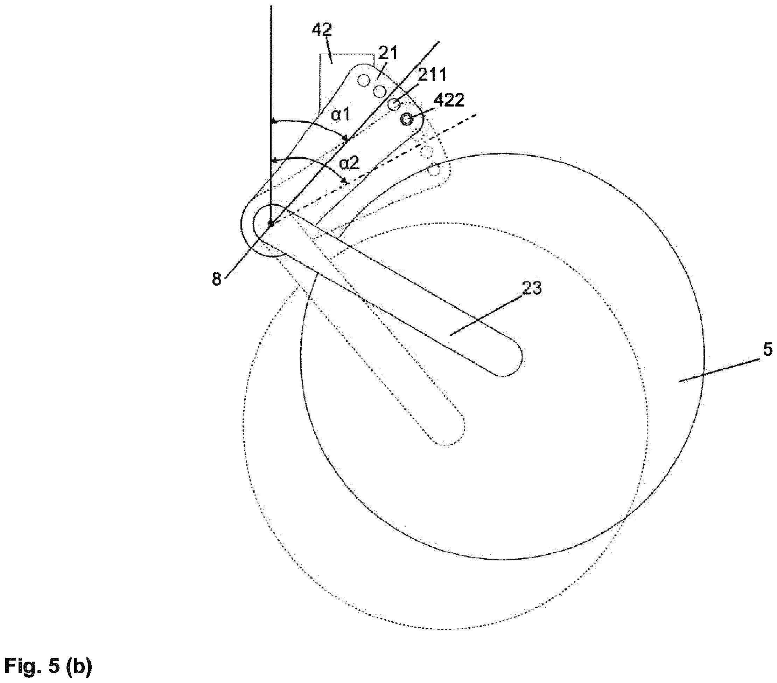

Fig. 5 verdeutlicht in (a) die Feineinstellung und in (b) die Grobeinstellung. Dafür zeigen Fig. 5 (a) und (b) jeweils eine Draufsicht auf die Anordnung der Fig. 3 (c) im montierten Zustand. Dabei sind in Fig. 5 (a) das Formteil 1, und in Fig. 5 (b) das erste Rahmenbauteil 21 jeweils in zwei verschiedene Positionen verstellt.

In Fig. 5 (a) ist das Formteil 1 der Fig. 2 (b) und (c) so um die Schraube 24 gedreht, dass ein Zungenpaar mit ungleich langen Zungen 121 - 12i zwischen die Gegenanlageflächen 28 der Ausnehmung 20 angeordnet sind. In der ersten Position, die hier durch eine durchgehende Linie dargestellt ist, ist die längere Zunge 121 - 12i des Zungenpaars dem Boden 6 zugewandt. In der zweiten Position, die hier durch eine gestrichelte Linie dargestellt ist, ist das Formteil 1 um 180° gedreht in die Ausnehmung 20 eingefügt und daher die kürzere Zunge 121 - 12i dem Boden 6 zugewandt.

Da der Bolzenabstand a der Schraube 24 von der Gegenanlagefläche 28 gegenüber einer mittigen Anordnung der Schraube 24 verschoben ist, ist das zweite Rahmenbauteil 22 in beiden Positionen um einen Anstellwinkel β1, β2 gegenüber einer Neutralstellung N verdreht. Dadurch ändert sich ein Winkel (nicht bezeichnet), den der Haltearm 23 zum Boden 6 aufweist. Dieser Winkel bestimmt einen Abstand (nicht bezeichnet) des Trägers 42 vom Boden 6, und daher die Höhe, in der die Komponente 40 beziehungsweise die Arbeitswerkzeuge 45 mit ihren Zinken 41 angeordnet ist oder sind.

In der ersten Position ist der Haltearm 23 gegenüber der Neutralstellung N um den ersten Anstellwinkel β1 in Richtung zum Boden 6 hin verschwenkt. Dadurch ist der Winkel des Haltearms 23 relativ zum Boden 6 vergrößert. Dadurch ist die Komponente 40 angehoben.

In der zweiten Position ist der Haltearm 23 gegenüber der Neutralstellung um einen betragsgleichen zweiten Anstellwinkel β2 in Richtung vom Boden 6 weg verschwenkt. Dadurch ist der Winkel des Haltearms 23 relativ zum Boden 6 verkleinert. Dadurch ist die Komponente 40 abgesenkt.

Die Neutralstellung N ist erreichbar, indem ein Zungenpaar mit Zungen 121 - 12i gleicher Länge 131 - 13i genutzt wird.

Das Formteil 1 der Ausführungsform der Fig. 2 (b) und (c) ermöglicht daher insgesamt fünf Abstandseinstellungen, das Formteil 1 der Ausführungsform der Fig. 2 (a) drei Abstandseinstellungen.

Fig. 5 (b) zeigt die Grobeinstellung des Rades 5. Dafür wird das erste Rahmenbauteil 21 genutzt. Dafür wird der Stift 422 in eine der Ausnehmungen 211 des ersten Rahmenbauteils 21 eingefügt. In der ersten hier dargestellten Position, die durch eine durchgezogene Linie dargestellt ist, ist der Stift 422 in eine unterste Ausnehmung 211 gefügt. Diese Position zeigt daher einen niedrigsten mittels der Grobeinstellung erreichbaren Abstand zum Boden 6. Das erste Rahmenbauteil 21 ist in dieser Position um einen dritten Anstellwinkel α1 gegenüber einer Bezugsachse (nicht bezeichnet), die hier als vertikale Achse gewählt ist, geneigt angeordnet.

Durch Verdrehen des ersten Rahmenbauteils 21 um einen vierten Anstellwinkel α2 um die Verstellachse 8 relativ zum Achsbock 42 kann der Stift 422 in eine der weiteren Ausnehmungen 211 gefügt werden. Auch dabei wird der Haltearm 23 gedreht, so dass sich sein Winkel relativ zum Boden 6 ändert.

In der zweiten, durch eine gestrichelte Linie dargestellten, Position ist der Stift 24 in die oberste Ausnehmung 211 gefügt. Der mittels der Grobeinstellung erreichbare Abstand ist bei dieser Position am größten.

Durch das in Fig. 5 (a) dargestellte Verdrehen des zweiten Rahmenbauteils 22 gegenüber dem ersten Rahmenbauteil 21 kann der mittels der Grobeinstellung erreichbare Abstand um einen dem Anstellwinkel β1, β2 des zweiten Rahmenbauteils 22 gegenüber dem ersten Rahmenbauteil 21 entsprechenden Abstand vergrößert oder verkleinert werden. Diese Feineinstellung wird beispielsweise zum Toleranzausgleich von Fertigungstoleranzen des Reifens 52 des Rades 5 genutzt.

## Patentansprüche

1. Formteil (1) zum Einstellen eines Abstands einer Komponente (40) einer landwirtschaftlichen Arbeitsmaschine (4) vom Boden, insbesondere zum Toleranzausgleich eines Reifendurchmessers eines Rades (5), mit einem ringförmigen Grundkörper (11), an dem ein Befestigungsmittel (10) zum Befestigen eines Rahmenbauteils (21, 22) vorgesehen ist, wobei sich der Grundkörper (11) in einer Ebene quer zu einer Längsachse (3) erstreckt, wobei das Formteil (1) zumindest eine Zunge (121 - 12i) aufweist, die sich vom Grundkörper (11) ausgehend in eine radiale Richtung (31) zur Längsachse (3) zu einem freien Ende (141 - 14i) hin erstreckt und zum Aufnehmen einer auf sie wirkenden Belastungskraft vorgesehen ist, **dadurch gekennzeichnet, dass** am Formteil (1), ausgehend vom Grundkörper (11), ein Zungenpaar aus zwei Zungen (121 - 12i) angeordnet ist, die sich jeweils vom Grundkörper (11) ausgehend in radialer Richtung (31) zur Längsachse (3) zu einem freien Ende (141 - 14i) hin erstrecken, die eine ungleiche Länge (131 - 13i) aufweisen und die an gegenüberliegenden Seiten des Grundkörpers (11) angeordnet sind,
wobei am Formteil (1), ausgehend vom Grundkörper (11), weitere Zungenpaare aus jeweils zwei Zungen (121 - 12i) angeordnet sind, die sich jeweils in radialer Richtung (31) zur Längsachse (3) erstrecken und einander gegenüberliegend am Formteil (1) angeordnet sind.

2. Formteil (1) nach Anspruch 1, **dadurch gekennzeichnet, dass** die Zungen (121 - 12i) in einer Umfangsrichtung (30) um die Längsachse (3) gleichmäßig verteilt am Grundkörper (11) angeordnet sind.

3. Formteil (1) nach einem der vorherigen Ansprüche, **dadurch gekennzeichnet, dass** es ein Zungenpaar mit Zungen (121 - 12i) gleicher Länge (131 - 13i) aufweist.

4. Formteil (1) nach einem der vorherigen Ansprüche, **dadurch gekennzeichnet, dass** die freien Enden (141 - 14i) eine im Querschnitt bogenförmige Kontur (17) aufweisen.

5. Formteil (1) nach einem der vorherigen Ansprüche, **dadurch gekennzeichnet, dass** die Zungen (121 - 12i) jeweils an ihrem freien Ende (141 - 14i) eine Anlagefläche (18) aufweisen, die durch eine sich entlang ihrer Kontur (17) verlaufende Linie und eine parallel zur Längsachse (3) verlaufende Linie aufgespannt ist.

6. Formteil (1) nach Anspruch 5, **dadurch gekennzeichnet, dass** die Anlageflächen (18) aller Zungen (121 - 12i) des Formteils (1) gleich sind, insbesondere bezüglich ihrer Breite (161) und/oder Kontur (17).

7. Formteil (1) nach einem der vorherigen Ansprüche, **dadurch gekennzeichnet, dass** jeweils ein Abstand (15) der freien Enden (141 - 14i) der beiden Zungen (121 - 12i) eines Zungenpaares für alle Zungenpaare des Formteils (1) gleich ist.

8. Komponente (40) für eine landwirtschaftliche Arbeitsmaschine (4), die ein Arbeitswerkzeug (45) sowie ein Rad (5) umfasst, wobei das Arbeitswerkzeug (45) mit dem Rad (5) über den Boden (6) führbar ist, wobei das Rad (5) an einem Träger (42) befestigt ist, wobei ein Abstand des Trägers (42) vom Boden (6) einstellbar ist, wobei die Abstandseinstellung des Trägers (42) eine Grobeinstellung sowie eine Feineinstellung umfasst,
**dadurch gekennzeichnet, dass**
am Träger (42) ein Haltearm (23) angeordnet ist, an dem ein erstes Rahmenbauteil (21) für die Grobeinstellung sowie ein zweites Rahmenbauteil (22) für die Feineinstellung befestigt sind.

9. Komponente (40) nach Anspruch 8, **dadurch gekennzeichnet, dass** die Grobeinstellung und/oder die Feineinstellung ein Formteil (1) nach einem der Ansprüche 1 - 7 umfasst.

10. Komponente (40) nach einem der Ansprüche 8 - 9, **dadurch gekennzeichnet, dass** mit der Grobeinstellung eine Höhe des Arbeitswerkzeugs (45) stufenweise einstellbar ist, wobei mit der Feineinstellung zwischen zwei Stufen der Grobeinstellung stufenweise Zwischenstufen einstellbar sind.

11. Komponente (40) nach einem der Ansprüche 8 - 10, **dadurch gekennzeichnet, dass** zur Grobeinstellung ein erster Anstellwinkel (α1, α2) des Trägers (42) zum ersten Rahmenbauteil (21), und zur Feineinstellung ein zweiter Anstellwinkel (β1, β2) des zweiten Rahmenbauteils (22) zum ersten Rahmenbauteil (21) veränderbar sind.

12. Komponente (40) nach einem der Ansprüche 8 - 11, **dadurch gekennzeichnet, dass** der Haltearm (23) ein erstes Ende (231) aufweist, an dem das erste Rahmenbauteil (21) oder das zweite Rahmenbauteil (22) drehfest befestigt ist, und ein zweites Ende (232) aufweist, an dem das Rad (5) befestigt ist.

13. Komponente (40) nach einem der Ansprüche 9 - 12, **dadurch gekennzeichnet, dass** das zweite Rahmenbauteil (22) eine Ausnehmung (20) zur Aufnahme des Formteils (1) umfasst, wobei am ersten Rahmenbauteil (21) ein Gegenbefestigungsmittel (24) angeordnet ist, wobei das Formteil (1) ein Befestigungsmittel (10) aufweist, wobei an der Ausnehmung (20) Gegenanlageflächen (28) für Anlageflächen (18) der Zungen (121 - 12i) eines Zungenpaares des Formteils (1) angeordnet sind, wobei bei in die Ausnehmung (20) des zweiten Rahmenbauteils (22) aufgenommenem Formteil (1) die Anlageflächen (18) eines Zungenpaares zwischen die Gegenanlageflächen (28) des zweiten Rahmenbauteils (22) eingefügt sind, und das Befestigungsmittel (10) mit dem Gegenbefestigungsmittel (24) so zusammenwirkt, dass die Rahmenbauteile (21, 22) aneinander befestigt sind.

14. Landwirtschaftliche Arbeitsmaschine (4), insbesondere Heuwerbungsmaschine, mit einem Formteil (1) nach einem der Ansprüche 1 - 7 oder mit einer Komponente (40) nach einem der Ansprüche 8 - 13.

## Claims

1. A molded part (1) for adjusting a distance of a component (40) of an agricultural working machine (4) from the ground, in particular for tolerance compensation of a tire diameter of a wheel (5), comprising an annular base body (11) on which a fastening means (10) for fastening a frame component (21, 22) is provided, wherein the base body (11) extends in a plane transverse to a longitudinal axis (3), wherein the molded part (1) has at least one tongue (121-12i) which extends from the base body (11) in a radial direction (31) to the longitudinal axis (3) towards a free end (141, 14i) and is provided for receiving a loading force acting thereon, **characterized in that**, starting from the base body (11),
a tongue pair consisting of two tongues (121-12i) is arranged on the molded part (1), both of which tongues extend in each case from the base body (11) in the radial direction (31) to the longitudinal axis (3) toward a free end (141-14i), which have an unequal length (131-13i) and which are arranged on opposite sides of the base body (11),
wherein, starting from the base body (11), further tongue pairs with two tongues (121-12i) each are arranged on the molded part (1), each of which tongues extends in the radial direction (31) to the longitudinal axis (3) and is arranged opposite one another on the molded part (1).

2. The molded part (1) according to claim 1, **characterized in that** the tongues (121 - 12i) are arranged in a circumferential direction (30) around the longitudinal axis (3) evenly distributed on the base body (11).

3. The molded part (1) according to one of the preceding claims, **characterized in that** it has a tongue pair with tongues (121-12i) of the same length (131-13i).

4. The molded part (1) according to one of the preceding claims, **characterized in that** the free ends (141-14i) have a contour (17) that is curved in cross section.

5. The molded part (1) according to one of the preceding claims, **characterized in that** the tongues (121-12i) each have a contact surface (18) at their free end (141-14i), said contact surface being defined by a line extending along its contour (17) and a line extending parallel to the longitudinal axis (3).

6. The molded part (1) according to claim 5, **characterized in that** the contact surfaces (18) of all tongues (121-12i) of the molded part (1) are the same, in particular with respect to their width (161) and/or contour (17).

7. The molded part (1) according to one of the preceding claims, **characterized in that** a distance (15) of the free ends (141-14i) of the two tongues (121-12i) of a tongue pair is the same for all tongue pairs of the molded part (1).

8. A component (40) for an agricultural working machine (4) comprising a working tool (45) and a wheel (5), wherein the working tool (45) can be guided over the ground (6) with the wheel (5), wherein the wheel (5) is fastened to a carrier (42), wherein a distance of the carrier (42) from the ground (6) is adjustable, wherein the distance adjustment of the carrier (42) comprises a rough adjustment and a fine adjustment,
**characterized in that**
a holding arm (23) is arranged on the carrier (42), on which holding arm a first frame component (21) for the rough adjustment and a second frame component (22) for the fine adjustment are fastened.

9. The component (40) according to claim 8, **characterized in that** the rough adjustment and/or the fine adjustment comprise(s) a molded part (1) according to one of claims 1-7.

10. The component (40) according to one of claims 8-9, **characterized in that** a height of the working tool (45) can be set in steps with the rough adjustment, wherein, with the fine adjustment, intermediate levels can be set in steps between two levels of the coarse adjustment.

11. The component (40) according to one of claims 8-10, **characterized in that** a first pitch angle (a1, a2) of the carrier (42) to the first frame component (21), and a second pitch angle (ß1, ß2) of the second frame component (22) to the first frame component (21) can be changed for the purpose of rough adjustment.

12. The component (40) according to one of claims 8-11, **characterized in that** the holding arm (23) has a first end (231) on which the first frame component (21) or the second frame component (22) is fixed in a rotationally fixed manner, and has a second end (232) on which the wheel (5) is fastened.

13. The component (40) according to one of claims 9-12, **characterized in that** the second frame component (22) comprises a recess (20) for receiving the molded part (1), wherein a mating fastening means (24) is arranged on the first frame component (21), wherein the molded part (1) has a fastening means (10), wherein counter contact surfaces (28) for contact surfaces (18) of the tongues (121-12i) of a tongue pair of the molded part (1) are arranged on the recess (20), wherein the contact surfaces (18) of a tongue pair are inserted between the counter contact surfaces (28) of the second frame component (22) when the molded part (1) is received in the recess (20) of the second frame component (22), and the fastening means (10) interacts with the mating fastening means (24) in such a way that the frame components (21, 22) are fastened to one another.

14. An agricultural working machine (4), in particular a haymaking machine, comprising a molded part (1) according to one of claims 1-7 or comprising a component (40) according to one of claims 8-13.

## Revendications

1. Pièce de forme (1) pour régler la distance d'un composant (40) d'une machine agricole (4) par rapport au sol notamment pour compenser les tolérances du diamètre de pneumatique d'une roue (5) et comprenant un corps de base annulaire (11) muni d'un moyen de fixation (10) pour être fixé à un élément de châssis (21, 22),
- le corps de base (11) s'étend dans un plan transversal à l'axe longitudinal (3),
- la pièce de forme (1) a au moins une languette (121-12i) qui, partant du corps de base (11) s'étend dans une direction radiale (31) par rapport à l'axe longitudinal (3) vers une extrémité libre (141-14i) et étant prévu pour recevoir la charge qui lui est appliquée,
pièce de forme (1) **caractérisée en ce que**
partant du corps de base (11) elle a une paire de languettes parmi les languettes (121-12i) issues chacune du corps de base (11) dans la direction radiale (31) par rapport à l'axe longitudinal (3) jusqu'à une extrémité libre (141-14i), qui ont une longueur différente (131-13i) et sont prévues sur les côtés opposés du corps de base (11),
* la pièce de forme (1) comporte d'autres paires de languettes composées de deux languettes (121-121) partant du corps de base (11) et qui s'étendent chaque fois dans une direction radiale (31) par rapport à l'axe longitudinal (3) et sont opposées l'une à l'autre dans la pièce de forme (1).

2. Pièce de forme (1) selon la revendication 1,
**caractérisée en ce que**
les languettes (121-12i) sont réparties régulièrement dans la direction périphérique (30) autour de l'axe longitudinal (3) sur le corps de base (11).

3. Pièce de forme (1) selon l'une des revendications précédentes,
**caractérisée en ce qu'**elle comporte
une paire de languettes composée de languettes (121-12i) de même longueur (131-13i).

4. Pièce de forme (1) selon l'une des revendications précédentes,
**caractérisée en ce que**
les extrémités libres (141-14i) ont un contour (17) à section en forme d'arc.

5. Pièce de forme (1) selon l'une des revendications précédentes,
**caractérisée en ce que**
à leurs extrémités libres (141-141) les languettes (121-12i) ont une surface d'appui (18) générée par une ligne selon leur contour (17) et une ligne parallèle à l'axe longitudinal (3).

6. Pièce de forme (1) selon la revendication 5,
**caractérisée en ce que**
les surfaces d'appui (18) de toutes les languettes (121-12i) de la pièce de forme (1) sont égales notamment par leur largeur (161) et/ou leur contour (17).

7. Pièce de forme (1) selon l'une des revendications précédentes,
**caractérisée en ce que**
la distance (15) respective des extrémités libres (141-14i) des deux languettes (121-12i) d'une paire de languettes sont égales pour toutes les paires de languettes de la pièce de forme (1).

8. Composant (40) de machine agricole (4) comprenant un outil (45) ainsi qu'une roue (5),
l'outil (45) étant guidé sur le sol (6) par la roue (5),
cette roue (5) étant fixée à un support (42),
- la distance du support (42) par rapport au sol (6) étant réglable,
- le réglage de la distance du support (42) comprenant un réglage grossier et un réglage fin,
composant **caractérisé en ce que**
le support (42) comporte un bras de maintien (23) auquel sont fixés un premier élément de châssis (21) pour le réglage grossier et un second élément de châssis (22) pour le réglage fin.

9. Composant (40) selon la revendication 8,
**caractérisé en ce que**
le réglage gossier et/ou le réglage fin comprend une pièce de forme (1) selon l'une des revendications 1 à 7.

10. Composant (40) selon l'une des revendications 8 et 9,
**caractérisé en ce que**
le réglage grossier permet de régler par étapes, la hauteur de l'outil (45) et le réglage fin règle permettant de régler par des étapes intermédiaires entre deux étapes du réglage grossier.

11. Composant (40) selon l'une des revendications 8 à 10,
**caractérisé en ce que**
pour le réglage grossier, on règle un premier angle (α1, α2) du support (42) par rapport à la première partie de châssis (21) et pour le réglage fin, on modifie un second angle de réglage (β1, β2) de la seconde partie de châssis (22) par rapport au premier élément de châssis (21).

12. Composant (40) selon l'une des revendications 8 à 11,
**caractérisé en ce que**
le bras de maintien (23) a une première extrémité (231) à laquelle est fixé solidairement en rotation, le premier composant de châssis (21) ou le second composant de châssis (22) et une seconde extrémité (232) à laquelle est fixée la roue (5).

13. Composant (40) selon l'une des revendications 9 à 12,
**caractérisé en ce que**
le second élément de châssis (22) a un évidement (20) pour recevoir la pièce de forme (1),
- le premier élément de châssis (21) étant muni d'un moyen de fixation complémentaire (24)
- la pièce de forme (1) a un moyen de fixation (10),
- l'évidement (20) comporte des surfaces d'appui complémentaires (28) pour les surfaces d'appui (18) des languettes (120-12i) d'une paire de languettes de la pièce de forme (1),
lorsque la pièce de forme (1) est reçue dans l'évidement (20) du second élément de châssis (22), les surfaces d'appui (18) d'une paire de languettes viennent entre les surfaces d'appui complémentaires (28) du second élément de châssis (22) et le moyen de fixation (10) coopère avec le moyen de fixation complémentaire (24) pour que les éléments de châssis (21, 22) soient fixés l'un à l'autre.

14. Machine agricole (4) notamment machine de fenaison comprenant une pièce de forme (1) selon l'une des revendications 1 à 7 ou un composant (40) selon l'une des revendications 8 à 13.
